# EUROPÄISCHE PATENTSCHRIFT

(11) **EP 3 486 447 B1**
(45) Veröffentlichungstag und Bekanntmachung des Hinweises auf die Patenterteilung: **03.11.2021**
(21) Anmeldenummer: 18195591.5
(22) Anmeldetag: 20.09.2018
(51) Int. Cl.: F02B 23/06, F02F 3/26

(54) **KOLBEN, INSBESONDERE FÜR EINE HPDI-DIESEL-GASBRENNKRAFTMASCHINE**
PISTON, IN PARTICULAR FOR A HPDI-DIESEL GAS INTERNAL COMBUSTION ENGINE
PISTON, EN PARTICULIER POUR UN MOTEUR À COMBUSTION INTERNE À GAZ DIESEL HPDI

(30) Priorität: 20.11.2017 DE 102017127291
(43) Veröffentlichungstag der Anmeldung: 22.05.2019
(73) Patentinhaber: MAN Truck & Bus SE, 80995 München (DE)
(72) Erfinder: Barciela Díaz-Blanco, Bruno, 90489 Nürnberg (DE); Weberskirch, Dirk Peter, 90765 Fürth (DE); Sommermann, Andreas, 91560 Heilsbronn (DE); Stein, Marcus, 91080 Spardorf (DE); Dressel, Tim, 90475 Nürnberg (DE)
(74) Vertreter: v. Bezold & Partner Patentanwälte - PartG mbB

(56) Entgegenhaltungen:
- WO-A1-2014/196423
- DE-A1-102011 056 519
- DE-A1-102016 116 046
- DE-T5-112008 002 527
- JP-A- 2004 190 573
- US-A1- 2005 115 537

## Beschreibung

Die Erfindung betrifft einen Kolben für eine Brennkraftmaschine, insbesondere eine HPDI-Diesel-Gasbrennkraftmaschine, und eine Brennkraftmaschine mit dem Kolben.

Bei einer HPDI-Diesel-Gasbrennkraftmaschine wird Gaskraftstoff zum Antreiben und Dieselkraftstoff zum Zünden des Gaskraftstoffs verwendet, wobei der Gaskraftstoff und der Dieselkraftstoff unter hohem Druck direkt in die Verbrennungskammer(n) eingespritzt werden. HPDI-Diesel-Gasbrennkraftmaschinen haben das Potential, im Vergleich zu reinen Diesel-Brennkraftmaschinen den Motorwirkungsgrad zu verbessern und niedrigere Abgasemissionen zu ermöglichen. Um das Potential von HPDI-Brennkraftmaschinen auszunutzen, müssen u. a. speziell angepasste Kolbengeometrien entwickelt werden. Bisher sind jedoch insbesondere im Nutzfahrzeugsektor keine bzw. kaum speziell angepasste Kolbengeometrien für HPDI-Diesel-Gasbrennkraftmaschinen bekannt.

Aus der DE 10 2013 022 040 A1 ist ein Kolben für eine Hubkolben-Verbrennungskraftmaschine bekannt. Der Kolben weist eine in Umfangsrichtung des Kolbens ringförmig umlaufende Kolbenkrone und eine in radialer Richtung innenseitig der Kolbenkrone angeordnete und ringförmig umlaufende Kolbenstufe auf. Die Kolbenstufe ist gegenüber der Kolbenkrone in axialer Richtung vertieft. Der Kolben weist eine Omega-Mulde auf, in welche die Kolbenstufe über eine ringförmig umlaufende Strahlteilerkontur übergeht. In radialer Richtung zwischen der Kolbenstufe und der Kolbenkrone ist eine gegenüber der Kolbenkrone in axialer Richtung vertiefte Ausnehmung angeordnet.

Die DE 10 2015 012 541 A1 offenbart einen Kolben für einen Gasmotor, mit einer Kolbenmulde. Der Kolben weist eine in Umfangsrichtung des Kolbens ringförmig umlaufende Kolbenkrone und eine in radialer Richtung zwischen der Kolbenkrone und der Kolbenmulde angeordnete und ringförmig umlaufende Kolbenstufe auf. Die Kolbenstufe ist gegenüber der Kolbenkrone in axialer Richtung vertieft und gegenüber der Kolbenmulde in axialer Richtung erhöht.

Aus der US 2005/115537 A1, der DE 10 2016 116046 A1, der WO 2014/196423 A1, der JP 2004/190573 A und der DE 11 2008 002527 A1 sind Kolben mit einer mehrstufigen Kolbenmulde bekannt.

Der Erfindung liegt die Aufgabe zu Grunde, eine Kolbengeometrie für eine HPDI-Diesel-Gasbrennkraftmaschine zu schaffen, welche zur Steigerung des Motorwirkungsgrades in Zusammenhang mit einer gleichzeitigen Senkung der Abgasemissionen führt.

Die Aufgabe wird gelöst durch einen Kolben gemäß dem unabhängigen Anspruch. Vorteilhafte Weiterbildungen sind in den abhängigen Ansprüchen und der Beschreibung angegeben.

Der Kolben ist für eine Brennkraftmaschine, insbesondere eine HPDI-Diesel-Gasbrennkraftmaschine, geeignet. Der Kolben weist eine Kolbenmulde, insbesondere Omega-Kolbenmulde, auf. Der Kolben weist eine Kolbenkronenfläche auf, die ringförmig umlaufend um eine Mittelachse des Kolbens vorgesehen ist. Der Kolben weist eine Mehrzahl von Kolbenstufen auf, die ringförmig umlaufend um die Mittelachse vorgesehen und zwischen der Kolbenkronenfläche und der Kolbenmulde angeordnet sind.

Die Kolbengeometrie ermöglicht die Teilung des eingesprühten Gaskraftstoffs und des Dieselkraftstoffs in einen ersten Teilstrom, der entlang der Kolbenmulde geführt wird, und einen zweiten Teilstrom, der entlang der Mehrzahl von Kolbenstufen geführt wird. In der Kolbenmulde kann der Kraftstoff in Richtung zu der Mittelachse des Kolbens geleitet werden, wobei in der Mulde eine Turbulenz des Teilstroms angepasst, insbesondere erhöht, werden kann. Entlang der Mehrzahl der Kolbenstufen können eine Mehrzahl von Strömungsabrisskanten erzeugt werden, um eine Turbulenz des zweiten Teilstroms wie gewünscht einzustellen. Damit können die Teilströme sowohl die Gemischbildungsprozesse als auch die Verbrennungsprozesse optimieren. Ein hoher Wirkungsgrad bei einer HPDI-Diesel-Gasbrennkraftmaschine geht einher mit solchen optimalen Gemischbildungs- und Verbrennungsprozessen. Eine gute Gemischbildung zwischen Luft, Gaskraftstoff und Dieselkraftstoff führt zu einer angepassten Turbulenzgenerierung und einer optimalen Verbrennungsgeschwindigkeit im Brennraum. Dies hat einen hohen Wirkungsgrad und niedrige Rohemissionen zur Folge. Eine der größten Herausforderungen bei HPDI-Diesel-Gasbrennkraftmaschinen ist die sogenannte Glühzündung, bei der es zur Selbstentzündung des Gaskraftstoffs kommt, die vorliegend unerwünscht ist. Die Ausnutzung des vorhandenen Sauerstoffes im Brennraum hat ebenfalls eine sehr große Bedeutung. Diese beiden Phänomen sind u.a. durch drei Faktoren im Brennraum beeinflusst: die Ladungsbewegung, die Konzentrationsverteilung des Kraftstoffs sowie das Temperaturniveau. Alle drei Faktoren hängen von der Auslegung der Kolbengeometrie ab und können insbesondere durch Vorsehen der hierin offenbarten Kolbengeometrie optimiert werden.

Insbesondere kann ein drallbehaftetes Brennverfahren verwendet werden, bei dem der oder die Lufteinlasskanäle des Zylinders so ausgeformt sind, dass die Einlassluft mit einem Drall um die Hochachse des Zylinders (entspricht der Mittelachse des Kolbens) in den Zylinder eingeleitet wird.

Erfindungsgemäß weist die Mehrzahl von Kolbenstufen eine (bezüglich der Mittelachse) radial innere Kolbenstufe und eine (bezüglich der Mittelachse) radial äußere Kolbenstufe auf. Insbesondere kann die radial äußere Kolbenstufe in einer Radialrichtung zu der Mittelachse in die radial innere Kolbenstufe übergehen. Damit kann im zweiten Teilstrom sowohl an einer Strömungsabrisskante der radial inneren Kolbenstufe als auch (danach) an einer Strömungsabrisskante der radial äußeren Kolbenstufe gezielt eine Turbulenz generiert werden. Zusätzlich kann über die Ausführung der Kolbenstufen gezielt und sukzessive beeinflusst werden, wieviel Kraftstoff weiter in Richtung zu der Zylinderwandung geleitet wird.

In einem Ausführungsbeispiel geht die radial innere Kolbenstufe über eine Strahlteilerkontur, die insbesondere ringförmig umlaufend um die Mittelachse vorgesehen ist, zweckmäßig in einer Radialrichtung zu der Mittelachse, in die Kolbenmulde über. Die Strahlteilerkontur kann den eingespritzten Kraftstoff in den ersten Teilstrom in die Kolbenmulde und in den zweiten Teilstrom entlang der Kolbenstufen aufteilen.

In einem weiteren Ausführungsbeispiel geht die radial äußere Kolbenstufe, insbesondere abgerundet, zweckmäßig in einer Radialrichtung weg von der Mittelachse, in die Kolbenkronenfläche über.

In einer Ausführungsform ist die Strahlteilerkontur als ein radial zur Mittelachse vorstehender Vorsprung ausgebildet. Alternativ oder zusätzlich ist die Strahlteilerkontur mit einem vorbestimmten Radius in einem Bereich zwischen größer als 0 mm und 30 mm, insbesondere zwischen 1 mm und 10 mm, vorzugsweise zwischen 2 mm und 6 mm, vorgesehen. Alternativ oder ergänzend definiert die Strahlteilerkontur an einer radial innersten Stelle der Strahlteilerkontur einen Innendurchmesser, der in einem Bereich zwischen 40 % bis kleiner 100 %, insbesondere zwischen 40 % und 80 %, vorzugsweise zwischen 40 % und 60 %, eines Kolbenaußendurchmessers des Kolbens liegt. Alternativ oder zusätzlich ist die Strahlteilerkontur (bzw. die radial innere Kolbenstufe) in einer Axialrichtung entlang der Mittelachse vertieft gegenüber der Kolbenkronenfläche in einem Bereich zwischen 0 % und 60 %, insbesondere zwischen 0 % und 20 %, vorzugsweise zwischen 2 % und 10 %, einer Maximaltiefe der Kolbenmulde. Insbesondere die Kombination der Parameter Innendurchmesser an der Strahlteilerkontur, Radius der Strahlteilerkontur und Höhe der Vertiefung der Strahlteilerkontur legen den Auftreffpunkt der Gas- und den Dieselstrahlen auf den Kolben fest. Durch die geeignete Kombination von Werten dieser Parameter kann ein geeigneter Auftreffpunkt gewählt werden, der bei der Turbulenzgenerierung hilft und damit den Gemischbildungs- und Verbrennungsprozess unterstützt, wie hierin detaillierter in der Beschreibung des Ausführungsbeispiels ausgeführt ist.

Erfindungsgemäß weist die radial innere Kolbenstufe einen Stufenboden, eine Stufenwand und einen Übergangsbereich zwischen dem Stufenboden und der Stufenwand auf. Erfindungsgemäß ist der Stufenboden der radial inneren Kolbenstufe geneigt zu einer gedachten ersten Ebene, die die Mittelachse in einem rechten Winkel schneidet. Erfindungsgemäß ist der Übergangsbereich der radial inneren Kolbenstufe mit einem vorbestimmten Radius ausgeführt. Erfindungsgemäß ist die Stufenwand der radial inneren Kolbenstufe geneigt zur Mittelachse.

Erfindungsgemäß sind der Stufenboden der radial inneren Kolbenstufe und die Stufenwand der radial inneren Kolbenstufe eben ausgeführt.

Erfindungsgemäß sind der Stufenboden der radial inneren Kolbenstufe und die Stufenwand der radial inneren Kolbenstufe in einer Radialrichtung weg von der Mittelachse ansteigend ausgeführt.

In einer weiteren Ausführungsform ist der vorbestimmte Radius des Übergangsbereichs der radial inneren Kolbenstufe zwischen größer als 0 mm und 10 mm, insbesondere zwischen 1 mm und 8 mm, vorzugsweise zwischen 1,5 mm und 6 mm. Alternativ oder ergänzend ist die Stufenwand der radial inneren Kolbenstufe in einem Winkel zwischen 0° und 60°, insbesondere zwischen 0° und 45°, vorzugsweise zwischen 15° und 45°, geneigt zur Mittelachse. Alternativ oder zusätzlich geht die Stufenwand der radial inneren Kolbenstufe über einen vorbestimmten Radius in einem Bereich zwischen größer als 0 mm und 10 mm, insbesondere zwischen größer als 0 mm und 8 mm, vorzugsweise zwischen 0,2 mm und 4 mm, in die radial äußere Kolbenstufe über. Die geeignete Kombination von Werten für die Parameter Radius des Übergangsbereichs, Radius des Übergangs zwischen den Kolbenstufen, Winkel der geneigten Stufenwand und ggf. die Differenz der Vertiefungen der Kolbenstufen führen zu einer geringen Entstehung von Ruß während des Verbrennungsvorgangs, wie hierin detaillierter in der Beschreibung des Ausführungsbeispiels ausgeführt ist.

In einer Ausführungsvariante ist der Stufenboden der radial inneren Kolbenstufe in einem Winkel zwischen 0° und 60°°, insbesondere zwischen 0° und 45°, vorzugsweise zwischen 15° und 45°, geneigt zu der gedachten ersten Ebene. Alternativ oder zusätzlich definiert der Übergangsbereich an einer radial innersten Stelle des Übergangsbereichs einen Innendurchmesser, der in einem Bereich zwischen 50 % und 95 %, insbesondere zwischen 60 % und 85 %, vorzugsweise zwischen 60 % und 70 %, eines Kolbenaußendurchmessers des Kolbens liegt.

Erfindungsgemäß weist die radial äußere Kolbenstufe einen Stufenboden, eine Stufenwand und einen Übergangsbereich zwischen dem Stufenboden und der Stufenwand auf. Erfindungsgemäß ist der Stufenboden der radial äußeren Kolbenstufe geneigt zu einer gedachten zweiten Ebene, die die Mittelachse in einem rechten Winkel schneidet. Erfindungsgemäß ist der Übergangsbereich der radial äußeren Kolbenstufe mit einem vorbestimmten Radius ausgeführt. Erfindungsgemäß erstreckt sich die Stufenwand der radial äußeren Kolbenstufe parallel zur Mittelachse.

Erfindungsgemäß sind der Stufenboden der radial äußeren Kolbenstufe und die Stufenwand der radial äußeren Kolbenstufe eben ausgeführt.

Erfindungsgemäß ist der Stufenboden der radial äußeren Kolbenstufe in einer Radialrichtung weg von der Mittelachse ansteigend ausgeführt.

In einem Ausführungsbeispiel ist der Stufenboden der radial äußeren Kolbenstufe in einem Winkel zwischen 0° und 60°, insbesondere zwischen 0° und 45°, vorzugsweise zwischen 15° und 45°, geneigt zu der gedachten zweiten Ebene. Alternativ oder zusätzlich ist der vorbestimmte Radius des Übergangsbereichs der radial äußeren Kolbenstufe zwischen größer als 0 mm und 10 mm, insbesondere zwischen 1 mm und 8 mm, vorzugsweise zwischen 1,5 mm und 6 mm. Alternativ oder ergänzend liegt eine Höhe der Stufenwand der radial äußeren Kolbenstufe in einem Bereich zwischen größer als 0 % und 60 %, insbesondere zwischen 0 % und 10 %, vorzugsweise zwischen 1 % und 5 %, einer Maximaltiefe der Kolbenmulde. Insbesondere die Kombination der Parameter Winkel des geneigten Stufenbodens, Radius des Übergangsbereichs und Höhe der Vertiefung der radial äußeren Kolbenstufe weisen einen großen Einfluss auf die Kohlenwasserstoffemissionen und den Wirkungsgrad, die in einer gegenläufigen Abhängigkeit zueinander stehen, auf. Die hierin angegebenen Werte für diese Parameter führen zu einem optimierten Ausgleich zwischen einem möglichst guten Wirkungsgrad und möglichst geringen Kohlenwasserstoffemissionen, wie hierin detaillierter in der Beschreibung des Ausführungsbeispiels ausgeführt ist. In einem weiteren Ausführungsbeispiel weist die Kolbenmulde eine zentrale Erhebung, insbesondere in Form einer Kegelspitze oder eines Kegelstumpfes, und/oder einen Hinterschnittbereich, der ringförmig umlaufend um die Mittelachse vorgesehen ist, auf. Vorzugsweise können die zentrale Erhebung und die Mittelachse einen Winkel in einem Bereich zwischen 15° und kleiner als 90°, insbesondere zwischen 40° und 80°, vorzugsweise zwischen 60° und 75°, einschließen. Alternativ oder zusätzlich kann der Hinterschnittbereich einen vorbestimmten Radius, insbesondere in einem Bereich zwischen größer als 0 mm und 50 mm, insbesondere zwischen größer als 0 mm und 30 mm, vorzugsweise zwischen 5 mm und 15 mm, aufweisen. Alternativ oder ergänzend kann die zentrale Erhebung einen vorbestimmten Radius, insbesondere in einem Bereich zwischen größer als 0 mm und 200 mm, insbesondere zwischen größer als 0 mm und 50 mm, vorzugsweise zwischen 5 mm und 25 mm, aufweisen. Alternativ oder zusätzlich ist die zentrale Erhebung in einer Axialrichtung entlang der Mittelachse vertieft gegenüber der Kolbenkronenfläche in einem Bereich zwischen 2 % und 50 %, insbesondere zwischen 4 % und 15 %, vorzugsweise zwischen 5 % und 10 %, einer Maximaltiefe der Kolbenmulde. Somit kann eine besonders vorteilhafte Turbulenzgenerierung für den in der Kolbenmulde strömenden Teilstrom des eingesprühten Gas- und Dieselkraftstoffs erzielt werden.

In einer Ausführungsform definiert die Kolbenkronenfläche an einer radial innersten Stelle der Kolbenkronenfläche einen Innendurchmesser, der zwischen 30% und 75 %, insbesondere zwischen 35 % und 70 %, vorzugsweise zwischen 40 % und 60 %, eines Kolbenaußendurchmessers des Kolbens ist. Alternativ oder zusätzlich ist die Kolbenkronenfläche eben ausgebildet. Alternativ oder zusätzlich ist die Kolbenmulde, die Kolbenkronenfläche und/oder die Mehrzahl von Kolbenstufen rotationssymmetrisch um die Mittelachse ausgebildet.

In einer weiteren Ausführungsform ist die Mehrzahl von Kolbenstufen in einer Axialrichtung entlang der Mittelachse vertieft gegenüber der Kolbenkronenfläche und/oder erhöht gegenüber der Kolbenmulde. Alternativ oder zusätzlich ist die Kolbenmulde in einer Axialrichtung entlang der Mittelachse vertieft gegenüber der Kolbenkronenfläche und/oder vertieft gegenüber der Mehrzahl von Kolbenstufen.

Insbesondere kann die Kolbenmulde in einer Axialrichtung entlang der Mittelachse vertieft gegenüber der Strahlteilerkontur, die Strahlteilerkontur in einer Axialrichtung entlang der Mittelachse vertieft gegenüber der radial inneren Kolbenstufe, die radial innere Kolbenstufe in einer Axialrichtung entlang der Mittelachse vertieft gegenüber der radial äußeren Kolbenstufe und/oder die radial äußere Kolbenstufe in einer Axialrichtung entlang der Mittelachse vertieft gegenüber der Kolbenkronenfläche vorgesehen sein.

In einer Ausführungsvariante weist die Kolbenmulde bezüglich der Kolbenkronenfläche eine Maximaltiefe auf. Die Maximaltiefe liegt in einem Bereich zwischen 10 % und 50 %, insbesondere zwischen 10 % und 30 %, vorzugsweise zwischen 10 % und 20 %, von einem Kolbenau-ßendurchmesser des Kolbens.

Die Erfindung betrifft auch eine Brennkraftmaschine, insbesondere eine HPDI-Diesel-Gasbrennkraftmaschine, mit mindestens einem Kolben wie hierin offenbart.

Die Erfindung ist auch auf ein Kraftfahrzeug, insbesondere Nutzfahrzeug (z. B. Lastkraftwagen oder Omnibus), gerichtet. Das Kraftfahrzeug weist mindestens einen Kolben wie hierin offenbart oder eine Brennkraftmaschine wie hierin offenbart auf.

Es kann auch möglich sein, den hierin offenbarten Kolben für andere Typen von Brennkraftmaschinen einzusetzen. Beispielsweise kann der hierin offenbarte Kolben auch bei Gasbrennkraftmaschinen eingesetzt werden, bei denen Gaskraftstoff zusammen mit Luft während des Einlasstaktes über den oder die Lufteinlasskanäle des Zylinderkopfes zugeführt wird und bei denen Dieselkraftstoff beispielsweise direkt in die Verbrennungskammer(n) zum Zünden des Luft-Gaskraftstoffgemischs eingespritzt wird.

Es kann ferner möglich sein, den hierin offenbarten Kolben für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schnittansicht eines Abschnitts eines Kolbens gemäß einem Ausführungsbeispiel der vorliegenden Offenbarung;
- Figur 2: eine Schnittansicht des Abschnitts des beispielhaften Kolbens mit eingezeichneten Winkelangaben;
- Figur 3: eine Schnittansicht des Abschnitts des beispielhaften Kolbens mit eingezeichneten Abmessungen;
- Figur 4: eine Schnittansicht des Abschnitts des beispielhaften Kolbens mit eingezeichneten Radien; und
- Figur 5: eine Tabelle mit beispielhaften Wertebereichen für die in den Figuren 2 bis 4 eingezeichneten Winkel, Abmessungen und Radien.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

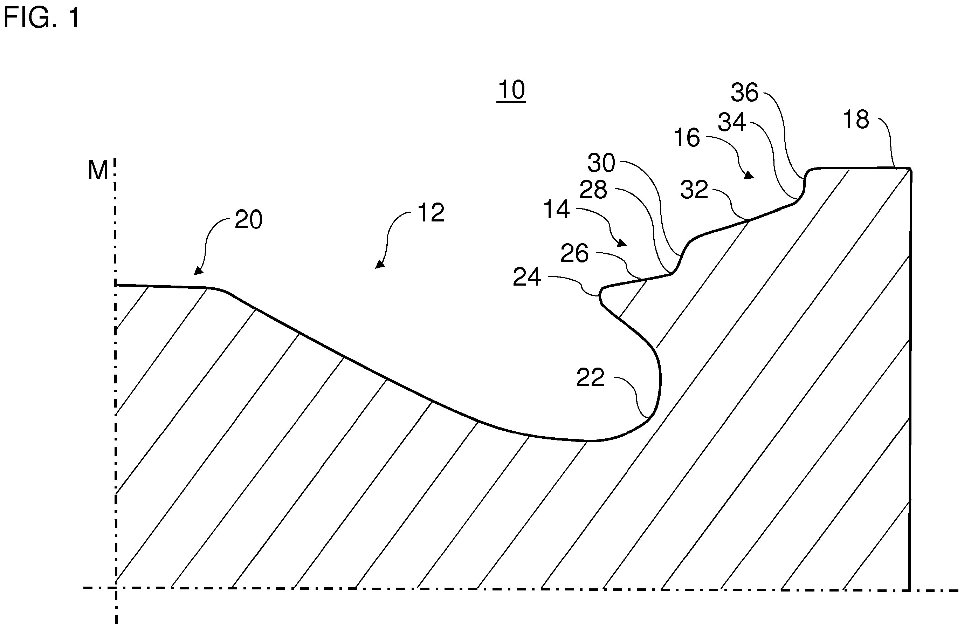

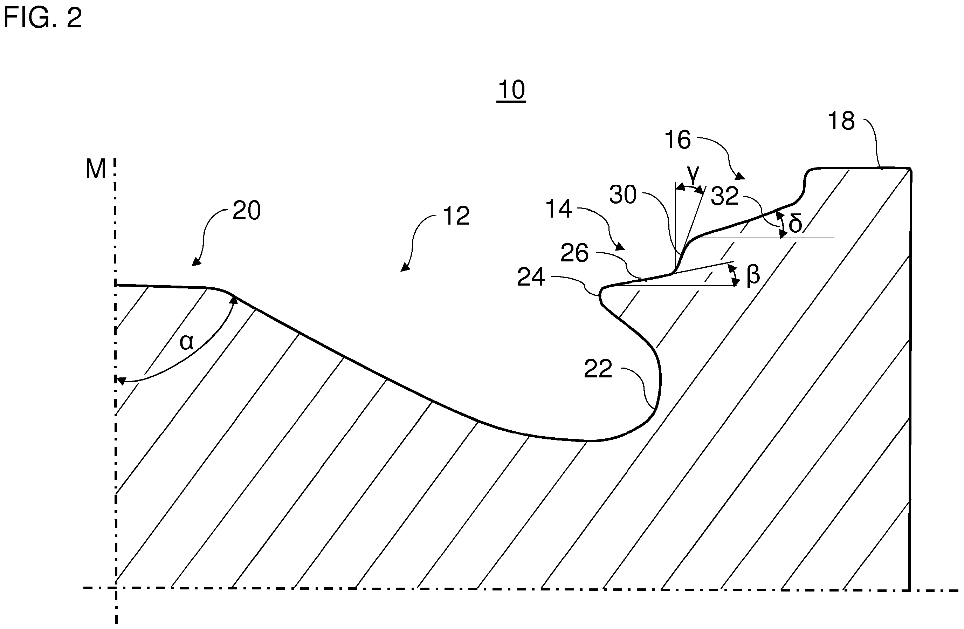

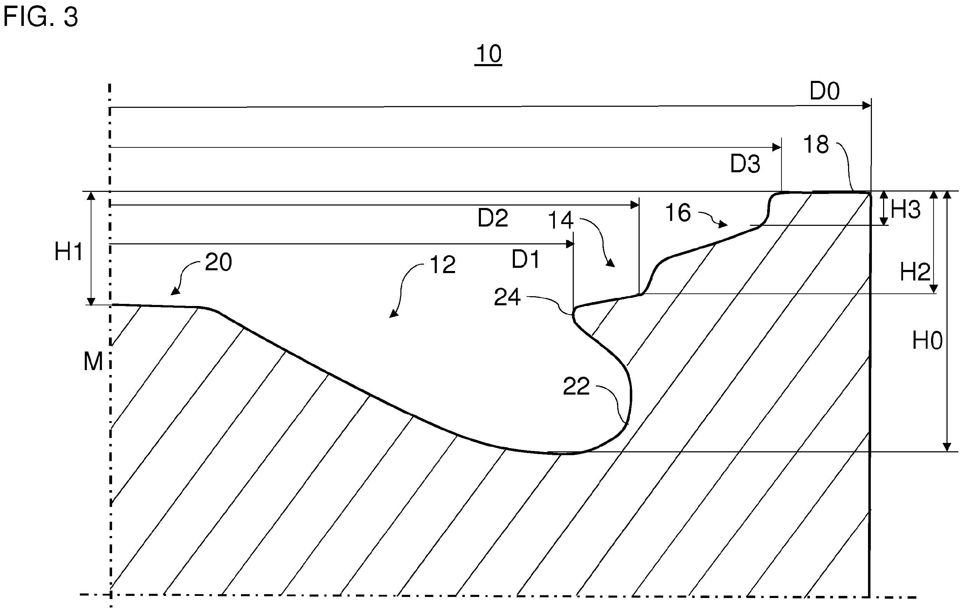

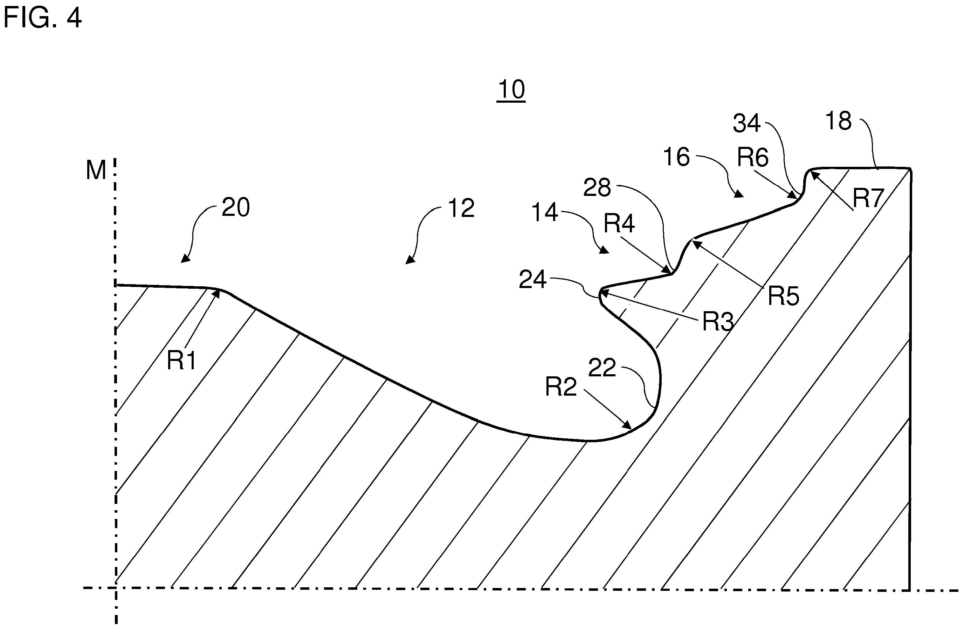

Die Figuren 1 bis 4 zeigen einen Abschnitt eines Kolbens 10. In Figur 1 sind die strukturellen Bereiche des Kolbens 10 angegeben. In Figur 2 sind insbesondere relevante Winkel des Kolbens 10 angegeben. In Figur 3 sind insbesondere relevante Abmessungen des Kolbens 10 angegeben. In Figur 4 sind insbesondere relevante Radien des Kolbens 10 angegeben.

Der Kolben 10 ist ein Hubkolben einer Brennkraftmaschine insbesondere eines Kraftfahrzeugs, zum Beispiel eines Nutzfahrzeugs. Das Nutzfahrzeug kann beispielsweise als ein Lastkraftwagen oder ein Omnibus ausgebildet sein. Die Brennkraftmaschine ist insbesondere eine sogenannte HPDI (engl. high pressure direct injection)-Diesel-Gasbrennkraftmaschine. Eine derartige Brennkraftmaschine wird durch Gaskraftstoff angetrieben, der durch Einspritzung von Diesel gezündet wird. Im Einzelnen kann ein Gaskraftstoff, zum Beispiel verflüssigtes Erdgas (engl. LNG - liquefied natural gas), gasförmig in die Verbrennungskammern der Brennkraftmaschine mit einem hohen Druck, zum Beispiel 300 bar bis 500 bar oder mehr, eingeleitet werden. Der Gaskraftstoff wird in den Verbrennungskammern durch eingespritzten Dieselkraftstoff gezündet. Der Dieselkraftstoff wird als Zündstrahl mit hohem Druck direkt in die Verbrennungskammer eingespritzt. Beispielsweise kann der Dieselkraftstoff mit einem Druck bis zu 600 bar oder mehr eingespritzt werden. Die Verbrennung des Gaskraftstoffs kann gemäß dem Diesel-Kreisprozess erfolgen. Zum Einleiten des Gaskraftstoffs und des Dieselkraftstoffs kann beispielsweise ein und derselbe Injektor verwendet werden, der als Zweikraftstoffinjektor ausgebildet sein kann. Der Injektor kann mittig im Zylinder angeordnet sein, und den Diesel- und Gaskraftstoff auf eine sogenannte Strahlteilerkontur des Kolbens 10 gerichtet einleiten.

Der Kolben 10 ist in einem Zylinder (nicht gezeigt) der Brennkraftmaschine angeordnet und translatorisch relativ zu einer Zylinderwandung des Zylinders bewegbar. Vorzugsweise weist die Brennkraftmaschine eine Mehrzahl von Zylindern mit jeweils einem Kolben 10 auf. Die Brennkraftmaschine umfasst auch eine Kurbelwelle, die an einem Kurbelgehäuse um eine Drehachse relativ zu dem Kurbelgehäuse drehbar gelagert ist. Der Kolben 10 ist über ein Pleuel gelenkig mit der Kurbelwelle verbunden, so dass die translatorischen Bewegungen des Kolbens 10 im Zylinder in eine rotatorische Bewegung der Kurbelwelle um ihre Drehachse umgewandelt werden. Bei den translatorischen Aufwärts- und Abwärtsbewegungen des Kolbens 10 kann sich dieser an der Zylinderwandung abstützen.

Der Kolben 10 weist eine Kolbenmulde 12, eine Mehrzahl von Kolbenstufen 14, 16 und eine Kolbenkronenfläche 18 auf. In dem gezeigten Ausführungsbeispiel umfassen die Mehrzahl von Kolbenstufen vorteilhafterweise eine radial innere Kolbenstufe 14 und eine radial äußere Kolbenstufe 16. Der Kolben 10 kann rotationssymmetrisch um eine Mittelachse M ausgebildet sein.

Die Kolbenmulde 12 ist als eine sogenannte Omegamulde ausgebildet. Die Omegamulde weist im Querschnitt im Wesentlichen die Form des griechischen Kleinbuchstabens "Omega" (ω) auf.

Die Kolbenmulde 12 weist eine zentrale Erhebung 20 auf. Die zentrale Erhebung 20 ist als Kegelstumpf geformt. Es ist allerdings bspw. auch möglich, dass die zentrale Erhebung 20 als Kegelspitze geformt ist.

In der Figur 2 ist gezeigt, dass die Kegelform der zentralen Erhebung 20 mit der Mittelachse M des Kolbens 20 einen Winkel α einschließt.

In der Figur 3 ist gezeigt, dass eine Deckfläche der Kegelstumpfform der zentralen Erhebung 20 in einer Axialrichtung der Mittelachse M um eine Höhe H1 vertieft gegenüber der Kolbenkronenfläche 18 ist.

In der Figur 4 ist gezeigt, dass die Deckfläche der Kegelstumpfform der zentralen Erhebung 20 mit einem Radius R1 in einem Mantelfläche der Kegelstumpfform der zentralen Erhebung 20 übergeht. Es ist bspw. auch möglich, dass ein Kegelmantelabschnitt in einen Kegelspitzenabschnitt der zentralen Erhebung mit dem Radius R1 übergeht und/oder die Spitze der Kegelform mit dem Radius R1 abgerundet ist.

Die Kolbenmulde 12 weist einen Hinterschnittbereich 22 auf. Der Hinterschnittbereich 22 erstreckt sich anschließend an die zentrale Erhebung 20 in einer Radialrichtung weg von der Mittelachse M. Der Hinterschnittbereich 22 ist ringförmig umlaufend um die Mittelachse M ausgebildet.

In der Figur 4 ist gezeigt, dass der Hinterschnittbereich 22 mit einem Radius R2 vorgesehen sein kann.

Die Kolbenmulde 12, insbesondere der Hinterschnittbereich 22 der Kolbenmulde 12, geht in eine Strahlteilerkontur 24 über. Die Strahlteilerkontur 24 dient insbesondere zum Teilen der eingespritzten Dieselkraftstoffzündstrahlen. Im Einzelnen sind die Dieselkraftstoffzündstrahlen auf die Strahlteilerkontur 24 gerichtet. Die Strahlteilerkontur 24 teilt die Zündstrahlen in einen ersten Teilstrom und einen zweiten Teilstrom. Der erste Teilstrom wird entlang des Hinterschnittbereichs 22 in einer Richtung zu der Mittelachse M umgelenkt. Der zweite Teilstrom wird entlang der Kolbenstufen 14 und 16 gelenkt.

Die Strahlteilerkontur 24 ist als ein radialer Vorsprung ausgebildet. Der radiale Vorsprung ist in einer Richtung zu der Mittelachse gerichtet. Die Strahlteilerkontur 24 steht über den Hinterschnittbereich 22 in einer Richtung zu der Mittelachse M über. Die Strahlteilerkontur 24 ist ringförmig umlaufend um die Mittelachse M ausgebildet. Die Strahlteilerkontur 24 geht in die radial innere Kolbenstufe 14 über.

In Figur 3 ist gezeigt, dass die Strahlteilerkontur 24 an einer radial innersten Stelle der Strahlteilerkontur einen Innendurchmesser D1 definiert.

In Figur 4 ist gezeigt, dass die Strahlteilerkontur 24 mit einem Radius R3 versehen ist.

Die radial innere Kolbenstufe 14 ist ringförmig umlaufend um die Mittelachse M ausgebildet. Die radial innere Kolbenstufe 14 weist einen Stufenboden 26, einen Übergangsbereich 28 und eine Stufenwand 30 auf. Der Stufenboden 26 geht in einer Radialrichtung zu der Mittelachse M in die Strahlteilerkontur 24 über. Der Übergangsbereich 28 verbindet den Stufenboden 26 und die Stufenwand 30. Die Stufenwand 30 geht in einer Radialrichtung weg von der Mittelachse M in die radial äußere Kolbenstufe 16 über.

In Figur 2 ist gezeigt, dass der Stufenboden 26 geneigt zu einer ersten Ebene, die die Mittelachse M senkrecht schneidet, ist. Der Stufenboden 26 kann einen Winkel β mit der ersten Ebene einschließen. In Figur 2 ist zusätzlich gezeigt, dass die Stufenwand 30 geneigt zu der Mittelachse M ist. Die Stufenwand 30 kann einen Winkel γ mit der Mittelachse M einschließen.

Insbesondere können der Stufenboden 26 und die Stufenwand 30 über den Übergangsbereich 28 mit einem stumpfen Winkel (einem Winkel größer als 90° und kleiner als 180°) ineinander übergehen.

In Figur 3 ist gezeigt, dass die radial innere Kolbenstufe 14, insbesondere an einem Übergang zwischen dem Stufenboden 26 und dem Übergangsbereich 28 (siehe Figur 1), einen Innendurchmesser D2 definiert. In Figur 3 ist ebenfalls gezeigt, dass die radial innere Kolbenstufe 14, insbesondere an einem Übergang zwischen dem Stufenboden 26 und dem Übergangsbereich 28 (siehe Figur 1), entlang der Mittelachse M mit einer Höhe H2 axial vertieft gegenüber der Kolbenkronenfläche 18 ausgebildet ist.

In Figur 4 ist gezeigt, dass der Übergangsbereich 28 mit einem Radius R4 ausgeführt sein kann.

Die radial äußere Kolbenstufe 16 ist ringförmig umlaufend um die Mittelachse M ausgebildet. Die radial äußere Kolbenstufe 16 weist einen Stufenboden 32, einen Übergangsbereich 34 und eine Stufenwand 36 auf. Der Stufenboden 32 geht in einer Radialrichtung zu der Mittelachse M in die Stufenwand 30 der radial inneren Kolbenstufe 14 über. Der Übergangsbereich 34 verbindet den Stufenboden 32 und die Stufenwand 36. Die Stufenwand 36 geht in einer Radialrichtung weg von der Mittelachse M in die Kolbenkronenfläche 18 über.

In Figur 2 ist gezeigt, dass der Stufenboden 32 geneigt zu einer zweiten Ebene, die die Mittelachse M senkrecht schneidet, ist. Der Stufenboden 32 kann einen Winkel δ mit der zweiten Ebene einschließen.

Die Stufenwand 36 kann sich parallel zu der Mittelachse M erstrecken. Insbesondere können der Stufenboden 32 und die Stufenwand 36 über den Übergangsbereich 34 mit einem stumpfen Winkel (einem Winkel größer als 90° und kleiner als 180°) ineinander übergehen.

In Figur 3 ist gezeigt, dass die radial äußere Kolbenstufe 16, insbesondere an einem Übergang zwischen der Stufenwand 36 und der Kolbenkronenfläche 18 (eine radial äußerste Stelle der radial äußeren Kolbenstufe 16) einen Innendurchmesser D3 definieren. In Figur 3 ist ebenfalls gezeigt, dass die radial innere Kolbenstufe 14, insbesondere an einem Übergang zwischen dem Stufenboden 32 und dem Übergangsbereich 34 (siehe Figur 1), entlang der Mittelachse M mit einer Höhe H3 axial vertieft gegenüber der Kolbenkronenfläche 18 ausgebildet ist.

In Figur 4 ist gezeigt, dass die Stufenwand 30 der radial inneren Kolbenstufe 14 mit einem Radius R5 in den Stufenboden 32 der radial äußeren Kolbenstufe 16 übergeht. In Figur 4 ist zusätzlich gezeigt, dass der Übergangsbereich 34 mit einem Radius R6 ausgeführt sein kann. In Figur 4 ist ebenfalls gezeigt, dass die Stufenwand 36 der radial äußeren Kolbenstufe 16 mit einem Radius R7 in die Kolbenkronenfläche 18 übergehen kann.

Die Kolbenkronenfläche 18 ist ringförmig umlaufend um die Mittelachse M vorgesehen. Die Kolbenkronenfläche 18 ist eben bzw. flächig ausgebildet. Die Kolbenkronenfläche 18 geht an einer radialen Außenseite in eine Mantelfläche des Kolbens 10 über. Im Bereich der Kolbenkronenfläche 18 wird bei einer Bewegung des Kolbens 10 zum oberen Totpunkt eine sogenannte Squishströmung (Quetschströmung) erzeugt, die radial nach innen zu der Mittelachse M gerichtet ist.

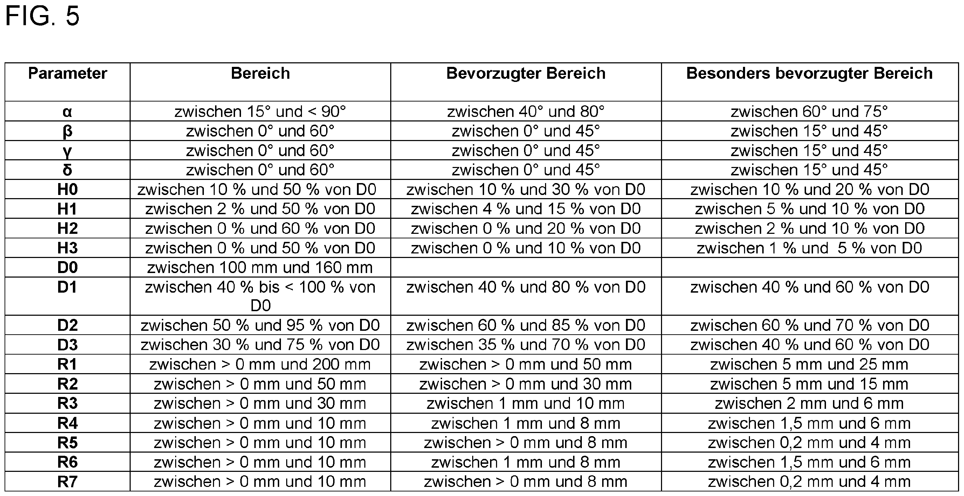

In Figur 5 sind beispielhafte Wertebereiche, bevorzugte Wertebereiche und besonders bevorzugte Wertebereiche für die Winkel α, β, γ, δ, die Höhen H0 bis H3, die Durchmesser D0 bis D3 und die Radien R1 bis R7 angegeben.

Es wird darauf hingewiesen, dass herausgefunden wurde, dass bestimmte Kombinationen einzelner Parametern (d. h. Winkel α, β, γ, δ, die Höhen H0 bis H3, die Durchmesser D0 bis D3 und die Radien R1 bis R7) besonders zu bevorzugen sind, wie beispielhaft nachstehend ausgeführt ist.

Die Parameter D1 (Innendurchmesser an der Strahlteilerkontur 24), R3 (Radius der Strahlteilerkontur 24) und Höhe der Vertiefung der Strahlteilerkontur 24 legen den Auftreffpunkt der Gas- und Dieselstrahlen auf den Kolben 10 fest. Durch geeignete Kombination dieser Parameter D1, R3 (vgl. Tabelle in Figur 5) und Höhe der Vertiefung der Strahlteilerkontur 24 kann somit ein geeigneter Auftreffpunkt gewählt werden, der bei der Turbulenzgenerierung hilft und damit den Gemischbildungs- und Verbrennungsprozess unterstützt. Der Auftreffpunkt wird so gewählt, dass die beim Auftreffen entstehenden Teilströme, die in die Kolbenmulde 12 und entlang der Kolbenstufen 14 und 16 strömen, ungefähr gleich groß sind. Es ist auch möglich, dass der Teilstrom in die Kolbenmulde kleiner ist als der Teilstrom entlang der Kolbenstufen 14 und 16, zum Beispiel im Verhältnis 40 % zu 60 %. Die nach Größe gewünschte Aufteilung der Teilströme kann dann zu einer geeigneten Turbulenzgenerierung genutzt werden.

Die Turbulenzgenerierung erfolgt für den ersten Teilstrom über die etwa 180° Umlenkung im Hinterschnittbereich 22 der Kolbenmulde 12 mittels des Radius R2 und des Winkels a. Die Turbulenzgenerierung erfolgt für den zweiten Teilstrom über die durch die Kolbenstufen 14, 16 realisierten Strömungsabrisskanten. Die Ausprägung der Strömungsabrisskanten wird durch die Parameter β (Winkel des geneigten Stufenbodens 26), γ (Winkel der geneigten Stufenwand 30), δ (Winkel des geneigten Stufenbodens 32), R4 (Radius des Übergangsbereichs 28), R5 (Radius zwischen den Kolbenstufen 14, 16) eingestellt. Durch geeignete Kombination der Parameter β, γ, δ, R4 und R5 (vgl. Tabelle in Figur 5) kann die Diffusion des zweiten Teilstroms wie gewünscht gelenkt werden.

Zusätzlich wird ein drallbehaftetes Brennverfahren verwendet, bei dem die Lufteinlasskanäle des Zylinders so ausgeformt sind, dass die Einlassluft mit einem Drall um die Hochachse des Zylinders (entspricht der Mittelachse M) in den Zylinder eingeleitet wird.

Die kombinierten Parametergruppen (D1, R3 und H1; α und R2; β, γ, δ, R4 und R5) ermöglichen jeweils einzeln und in Kombination, dass sich der Kraftstoff und die Luft besonders gut und homogen vermischen. Insbesondere kann ein mageres Brennverfahren verwendet werden. Die zur Verfügung stehende Luft wird vom Brennverfahren effektiv ausgenutzt und es bestehen insbesondere keine oder kaum Probleme mit lokalen Luftmangelzonen, die zu unvollständiger Verbrennung des Kraftstoffs führen.

Die Parameter δ (Winkel des geneigten Stufenbodens 32), R6 (Radius des Übergangsbereichs 34) und H3 (Höhe der Vertiefung der radial äußeren Kolbenstufe 16) weisen in Kombination einen großen Einfluss auf die Kohlenwasserstoffemissionen und den Wirkungsgrad, die in einer gegenläufigen Abhängigkeit zueinander stehen ("Tradeoff"), auf. Die Parameter δ, R6 und H3 kennzeichnen den Bereich des Kolbens 10, der am weitesten vom Zentrum des Kolbens 10 bzw. der Mittelachse M entfernt ist. In diesem Bereich muss insbesondere für eine möglichst große Umsetzung des Kraftstoffs gesorgt werden, damit keine unverbrannten Kohlenwasserstoffe zurückbleiben. Ist der durch die Parameter δ, R6 und H3 gekennzeichnete Bereich zu ausgeprägt, d. h. ist bspw. die Höhe H3 zu hoch, wird der entlangströmende zweite Teilstrom zu stark gebremst. Ist dieser Bereich hingegen zu wenig ausgeprägt, d. h. ist beispielsweise die Höhe H3 zu gering, ist die Strömungsabrisskante zu klein und es kommt zu keiner ausgeprägtem Turbulenz. Eine geeignete Kombination der Parameter δ, R6 und H3 (vgl. Tabelle von Figur 5) bewirkt einen Ausgleich zwischen einem möglichst guten Wirkungsgrad und möglichst geringen Kohlenwasserstoffemissionen.

Die Parameter R4 (Radius des Übergangsbereichs 28), R5 (Radius des Übergangs zwischen den Kolbenstufen 14, 16), γ (Winkel der geneigten Stufenwand 30) und die Differenz der Höhen H2-H3 (Differenz der Vertiefungen der Kolbenstufen 14, 16) weisen in Kombination einen großen Einfluss auf die Entstehung von Ruß während des Verbrennungsvorgangs auf. Ruß tritt beispielsweise auf, wenn unter brennstoffreichen Bedingungen der Kraftstoff nicht vollständig verbrannt wird. Während der Verbrennung wird die Flammenfront an der Stufenwand 30 abgebremst. Dieser Abbremseffekt bzw. Wandeffekt darf nicht zu groß sein, da sonst die Verbrennung negativ beeinflusst wird. Andererseits wird die Stufenwand 30 benötigt, um eine erneute Abrisskante für den zweiten Teilstrom darzustellen. Eine geeignete Kombination der Parameter R4, R5, γ und H2-H3 bewirkt eine möglichst rußarme Verbrennung des Kraftstoffs. Die Verhältnisse H2/H0 (Höhe der Vertiefung der Kolbenstufe 14 / Maximaltiefe der Kolbenmulde 12), D3/D1 (Innendurchmesser an der Kolbenkronenfläche 18/ Innendurchmesser an der Strahlteilerkontur 24) sowie der Parameter α (Winkel der zentralen Erhebung 20) haben in Kombination einen großen Einfluss auf den Kraftstoffverbrauch und die Stickoxidbildung, die in einer gegenläufigen Abhängigkeit zueinander stehen ("Tradeoff"). Insbesondere betreffen die Verhältnisse und der Winkel α ein Verhältnis von der Kolbenmulde 12 zu dem Bereich oberhalb der Kolbenmulde 12, der durch die Kolbenstufen 14 und 16 begrenzt wird. Mittels des Verhältnisses kann insbesondere eine Verbrennungsgeschwindigkeit und eine Luftausnutzung eingestellt werden. Eine hohe Brenngeschwindigkeit führt zu einem hohen Verbrennungswirkungsgrad aber auch zu großen Stickoxidemissionen. Die Stickoxidemissionen entstehen insbesondere in Zonen mit Temperaturspitzen. Eine niedrige Brenngeschwindigkeit führt hingegen zu einem kleineren Verbrennungswirkungsgrad aber auch zu geringeren Stickoxidemissionen. Eine geeignete Kombination der Verhältnisse H2/H0, D3/D1 sowie des Parameters α (vgl. Tabelle von Figur 5) bewirkt einen Ausgleich zwischen einem möglichst guten Verbrennungswirkungsgrad und möglichst geringen Stickoxidemissionen.

Die Parameter δ (Winkel des geneigten Stufenboden 32), R2 (Radius des Hinterschnittbereichs 22), R1 (Radius am Übergang der zentralen Erhebung zur Deckfläche bzw. Kegelspitze) und H1 (Höhe der Vertiefung der zentralen Erhebung 20) wirken sich in Kombination insbesondere auf die Kohlenmonoxid- und Kohlenwasserstoffemissionen, auf die Verbrennungsdauer sowie das für die Verbrennung notwendige Kraftstoff-/Luftverhältnis aus. Die Parameter δ, R2, R1 und H1 kennzeichnen das Volumen innerhalb der Kolbenmulde 20. Dieses Volumen sollte vorzugsweise nicht zu groß werden, da sonst Zonen entstehen können, in denen der Kraftstoff von der Flammenfront nicht oder nicht vollständig erreicht und somit umgesetzt wird. Derartige Zonen sollten stattdessen durch Kolbenmaterial aufgefüllt sein. Eine geeignete Kombination der Parameter δ, R2, R1 und H1 (vgl. Tabelle von Figur 5) führt zu geringen Kohlenmonoxid- und Kohlenwasserstoffemissionen, optimiert die Verbrennungsdauer und ermöglicht ein mageres Brennverfahren.

### Bezugszeichenliste

- 10: Kolben
- 12: Kolbenmulde
- 14: Radial innere Kolbenstufe
- 16: Radial äußere Kolbenstufe
- 18: Kolbenkronenfläche
- 20: Zentrale Erhebung
- 22: Hinterschnittbereich
- 24: Strahlteilerkontur
- 26: Stufenboden
- 28: Übergangsbereich
- 30: Stufenwand
- 32: Stufenboden
- 34: Übergangsbereich
- 36: Stufenwand
- M: Mittelachse
- R1 ― R7: Radien
- α ― γ: Winkel
- H0 ― H3: Höhen
- D0 ― D3: Durchmesser

## Patentansprüche

1. Kolben (10) für eine Brennkraftmaschine, insbesondere eine HPDI-Diesel-Gasbrennkraftmaschine, aufweisend:
eine Kolbenmulde (12), insbesondere Omega-Kolbenmulde;
eine Kolbenkronenfläche (18), die ringförmig umlaufend um eine Mittelachse (M) des Kolbens (10) vorgesehen ist; und
eine Mehrzahl von Kolbenstufen (14, 16), die ringförmig umlaufend um die Mittelachse (M) vorgesehen und zwischen der Kolbenkronenfläche (18) und der Kolbenmulde (12) angeordnet sind,
wobei die Mehrzahl von Kolbenstufen (14, 16) eine radial innere Kolbenstufe (14) und eine radial äußere Kolbenstufe (16) aufweist, und, insbesondere, die radial äußere Kolbenstufe (16) in einer Radialrichtung zu der Mittelachse (M) in die radial innere Kolbenstufe (14) übergeht;
wobei die radial innere Kolbenstufe (14) einen Stufenboden (26), eine Stufenwand (30) und einen Übergangsbereich (28) zwischen dem Stufenboden (26) der radial inneren Kolbenstufe (14) und der Stufenwand (30) der radial inneren Kolbenstufen (14) aufweist; wobei:
- der Stufenboden (26) der radial inneren Kolbenstufe (14) geneigt zu einer gedachten ersten Ebene, die die Mittelachse (M) in einem rechten Winkel schneidet, ist;
- der Übergangsbereich (28) der radial inneren Kolbenstufe (14) mit einem vorbestimmten Radius (R4) ausgeführt ist;
- die Stufenwand (30) der radial inneren Kolbenstufe (14) geneigt zur Mittelachse (M) ist;
- der Stufenboden (26) der radial inneren Kolbenstufe (14) und die Stufenwand (30) der radial inneren Kolbenstufe (14) eben ausgeführt sind;
- der Stufenboden (26) der radial inneren Kolbenstufe (14) und die Stufenwand (30) der radial inneren Kolbenstufe (14) in einer Radialrichtung weg von der Mittelachse (M) ansteigend ausgeführt sind;
die radial äußere Kolbenstufe (16) einen Stufenboden (32), eine Stufenwand (36) und einen Übergangsbereich (34) zwischen dem Stufenboden (32) der radial äußeren Kolbenstufe (16) und der Stufenwand (36) der radial äußeren Kolbenstufe (16) aufweist, wobei:
- der Stufenboden (32) der radial äußeren Kolbenstufe (16) geneigt zu einer gedachten zweiten Ebene, die die Mittelachse (M) in einem rechten Winkel schneidet, ist;
- der Übergangsbereich (34) der radial äußeren Kolbenstufe (16) mit einem vorbestimmten Radius (R6) ausgeführt ist;
- die Stufenwand (36) der radial äußeren Kolbenstufe (16) sich parallel zur Mittelachse (M) erstreckt;
- der Stufenboden (32) der radial äußeren Kolbenstufe (16) und die Stufenwand (36) der radial äußeren Kolbenstufe (16) eben ausgeführt sind; und
- der Stufenboden (32) der radial äußeren Kolbenstufe (16) in einer Radialrichtung weg von der Mittelachse (M) ansteigend ausgeführt ist.

2. Kolben (10) nach Anspruch 1, wobei:
die radial innere Kolbenstufe (14) über eine Strahlteilerkontur (24), die ringförmig umlaufend um die Mittelachse (M) vorgesehen ist, in die Kolbenmulde (12) übergeht..

3. Kolben (10) nach Anspruch 2, wobei:
die Strahlteilerkontur (24) als ein radial zur Mittelachse (M) vorstehender Vorsprung ausgebildet ist.

4. Kolben (10) nach einem der Ansprüche 1 bis 3, wobei:
die radial äußere Kolbenstufe (16), insbesondere abgerundet, in die Kolbenkronenfläche (18) übergeht.

5. Kolben (10) nach einem der vorherigen Ansprüche, wobei:
die Stufenwand (30) der radial inneren Kolbenstufe (14) in einem Winkel (γ) zwischen 0° und 60°, insbesondere zwischen 0° und 45°, vorzugsweise zwischen 15° und 45°, geneigt zur Mittelachse (M) ist.

6. Kolben (10) nach einem der vorherigen Ansprüche, wobei:
der Stufenboden (26) der radial inneren Kolbenstufe (14) in einem Winkel (β) zwischen 0° und 60°, insbesondere zwischen 0° und 45°, vorzugsweise zwischen 15° und 45°, geneigt zu der gedachten ersten Ebene ist.

7. Kolben (10) nacheinem der vorherigen Ansprüche, wobei:
der Stufenboden (32) der radial äußeren Kolbenstufe (16) in einem Winkel (δ) zwischen 0° und 60°, insbesondere zwischen 0° und 45°, vorzugsweise zwischen 15° und 45°, geneigt zu der gedachten zweiten Ebene ist.

8. Kolben (10) nach einem der vorherigen Ansprüche, wobei:
die Kolbenmulde (12) eine zentrale Erhebung (20), insbesondere in Form einer Kegelspitze oder eines Kegelstumpfes, aufweist, wobei:
die zentrale Erhebung (20) und die Mittelachse (M) einen Winkel (α) in einem Bereich zwischen 15° und kleiner 90°, insbesondere zwischen 40° und 80°, vorzugsweise zwischen 60° und 75°, einschließen.

9. Kolben (10) nach einem der vorherigen Ansprüche, wobei:
die Kolbenkronenfläche (18) an einer radial innersten Stelle der Kolbenkronenfläche (18) einen Innendurchmesser (D3) definiert, der zwischen 30% und 75 %, insbesondere zwischen 35 % und 70 %, vorzugsweise zwischen 40 % und 60 %, eines Kolbenau-ßendurchmessers (D0) des Kolbens (10) ist.

10. Kolben (10) nach einem der vorherigen Ansprüche, wobei: die Mehrzahl von Kolbenstufen (14, 16) in einer Axialrichtung entlang der Mittelachse (M) vertieft gegenüber der Kolbenkronenfläche (18) und/oder erhöht gegenüber der Kolbenmulde (12) sind.

11. Kolben (10) nach einem der vorherigen Ansprüche, wobei:
die Kolbenmulde (12) bezüglich der Kolbenkronenfläche (18) eine Maximaltiefe (H0) aufweist; und
die Maximaltiefe (H0) in einem Bereich zwischen 10 % und 50 %, insbesondere zwischen 10 % und 30 %, vorzugsweise zwischen 10 % und 20 %, von einem Kolbenau-ßendurchmesser (D0) des Kolbens (10) liegt.

12. Brennkraftmaschine, insbesondere HPDI-Diesel-Gasbrennkraftmaschine, mit mindestens einem Kolben (10) nach einem der Ansprüche 1 bis 11.

13. Brennkraftmaschine nach Anspruch 12, ferner aufweisend:
einen oder mehrere Lufteinlasskanäle eines Zylinders, die so ausgeformt sind, dass Einlassluft mit einem Drall um die Mittelachse des mindestens einen Kolbens in den Zylinder eingeleitet wird, für ein drallbehaftetes Brennverfahren.

14. Brennkraftmaschine nach Anspruch 12, wenn zumindest abhängig von Anspruch 2, oder Anspruch 13, wenn über Anspruch 12 zumindest abhängig von Anspruch 2, ferner aufweisend:
einen Injektor, der mittig im Zylinder angeordnet und dazu ausgebildet ist, Diesel- und Gaskraftstoff auf die Strahlteilerkontur (24) des Kolbens (10) gerichtet einzuleiten.

15. Kraftfahrzeug, insbesondere Nutzfahrzeug mit mindestens einem Kolben (10) nach einem der Ansprüche 1 bis 11 oder einer Brennkraftmaschine nach einem der Ansprüche 12 bis 14.

## Claims

1. A piston (10) for an internal combustion engine, in particular an HPDI diesel/gas internal combustion engine, having:
a piston recess (12), in particular an omega piston recess;
a piston crown face (18) which is provided so as to extend annularly about a centre axis (M) of the piston (10); and
a plurality of piston stages (14, 16) which are provided so as to extend annularly about the centre axis (M) and which are arranged between the piston crown face (18) and the piston recess (12),
wherein the plurality of piston stages (14, 16) have a radially inner piston stage (14) and a radially outer piston stage (16) and in particular the radially outer piston stage (16) merges in a radial direction with respect to the centre axis (M) into the radially inner piston stage (14);
wherein the radially inner piston stage (14) has a stage base (26), a stage wall (30) und a transition region (28) between the stage base (26) of the radially inner piston stage (14) and the stage wall (30) of the radially inner piston stage (14); wherein:
- the stage base (26) of the radially inner piston stage (14) is inclined with respect to a notional first plane, which intersects with the centre axis (M) at a right angle;
- the transition region (28) of the radially inner piston stage (14) is constructed with a predetermined radius (R4);
- the stage wall (30) of the radially inner piston stage (14) is inclined with respect to the centre axis (M);
- the stage base (26) of the radially inner piston stage (14) and the stage wall (30) of the radially inner piston stage (14) are constructed in a planar manner;
- the stage base (26) of the radially inner piston stage (14) and the stage wall (30) of the radially inner piston stage (14) are constructed so as to rise in a radial direction away from the centre axis (M);
the radially outer piston stage (16) has a stage base (32), a stage wall (36) and a transition region (34) between the stage base (32) of the radially outer piston stage (16) and the stage wall (36) of the radially outer piston stage (16), wherein:
- the stage base (32) of the radially outer piston stage (16) is inclined with respect to a notional second plane which intersects with the centre axis (M) at a right angle;
- the transition region (34) of the radially outer piston stage (16) is constructed with a predetermined radius (R6);
- the stage wall (36) of the radially outer piston stage (16) extends parallel to the centre axis (M);
- the stage base (32) of the radially outer piston stage (16) and the stage wall (36) of the radially outer piston stage (16) are constructed in a planar manner; and
- the stage base (32) of the radially outer piston stage (16) is constructed so as to rise in a radial direction away from the centre axis (M) .

2. The piston (10) according to Claim 1, wherein:
the radially inner piston stage (14) merges via a jet splitter contour (24), which is provided so as to extend annularly about the centre axis (M), into the piston recess (12).

3. The piston (10) according to Claim 2, wherein:
the jet splitter contour (24) is constructed as a projection which protrudes radially with respect to the centre axis (M).

4. The piston (10) according to any one of Claims 1 to 3, wherein:
the radially outer piston stage (16) merges into the piston crown face (18), in particular in a rounded manner.

5. The piston (10) according to any one of the preceding claims, wherein:
the stage wall (30) of the radially inner piston stage (14) is inclined at an angle (γ) between 0° and 60°, in particular between 0° and 45°, preferably between 15° and 45°, with respect to the centre axis (M).

6. The piston (10) according to any one of the preceding claims, wherein:
the stage base (26) of the radially inner piston stage (14) is inclined at an angle (β) between 0° and 60°, in particular between 0° and 45°, preferably between 15° und 45°, with respect to the notional first plane.

7. The piston (10) according to any one of the preceding claims, wherein:
the stage base (32) of the radially outer piston stage (16) is inclined at an angle (δ) between 0° and 60°, in particular between 0° and 45°, preferably between 15° and 45°, with respect to the notional second plane.

8. The piston (10) according to any one of the preceding claims, wherein:
the piston recess (12) has a central protrusion (20), in particular in the form of a cone tip or a truncated cone, wherein:
the central protrusion (20) and the centre axis (M) define an angle (α) in a range between 15° and 90°, in particular between 40° and 80°, preferably between 60° and 75°.

9. The piston (10) according to any one of the preceding claims, wherein:
the piston crown face (18) defines at a radially innermost location of the piston crown face (18) an inner diameter (D3) which is between 30% and 75%, in particular between 35% and 70%, preferably between 40% and 60%, of a piston outer diameter (D0) of the piston (10).

10. The piston (10) according to any one of the preceding claims, wherein:
the plurality of piston stages (14, 16) are recessed with respect to the piston crown face (18), and/or raised with respect to the piston recess (12), in an axial direction along the centre axis (M) .

11. The piston (10) according to any one of the preceding claims, wherein:
the piston recess (12) has a maximum depth (H0) with respect to the piston crown face (18); and
the maximum depth (H0) is in a range between 10% and 50%, in particular between 10% and 30%, preferably between 10% and 20%, of a piston outer diameter (D0) of the piston (10).

12. An internal combustion engine, in particular HPDI diesel/gas internal combustion engine, having at least one piston (10) according to any one of Claims 1 to 11.

13. The internal combustion engine according to Claim 12, furthermore having:
one or more air inlets channels of a cylinder, which are formed in such a manner that inlet air is introduced into the cylinder with a swirling action about the central axis of the at least one piston, for a swirling combustion method.

14. The internal combustion engine according to Claim 12, if at least dependent on Claim 2, or Claim 13, if at least dependent on Claim 2 via Claim 12, furthermore having:
an injector, which is arranged centrally in the cylinder and which is designed to introduce diesel and gas fuel in a directed manner onto the jet splitter contour (24) of the piston (10).

15. A motor vehicle, in particular utility vehicle having at least one piston (10) according to any one of Claims 1 to 11 or an internal combustion engine according to any one of Claims 12 to 14.

## Revendications

1. Piston (10) pour un moteur à combustion interne, en particulier un moteur diesel à combustion interne à gaz à injection directe sous haute pression (HPDI), comprenant :
une cavité de piston (12), en particulier une cavité de piston en forme d'oméga ;
une surface de tête de piston (18) qui est prévue en forme d'anneau de manière périphérique autour d'un axe médian (M) du piston (10) ; et
une pluralité de gradins de piston (14, 16) qui sont prévus en forme d'anneau de manière périphérique autour de l'axe médian (M) et qui sont disposés entre la surface de tête de piston (18) et la cavité de piston (12),
dans lequel la pluralité de gradins de piston (14, 16) comprend un gradin de piston radialement intérieur (14) et un gradin de piston radialement extérieur (16), et,
en particulier, le gradin de piston radialement extérieur (16) se prolonge dans le gradin de piston radialement intérieur (14) dans une direction radiale par rapport à l'axe médian (M) ;
dans lequel le gradin de piston radialement intérieur (14) comprend un fond de gradin (26), une paroi de gradin (30) et une région de transition (28) entre le fond de gradin (26) du gradin de piston radialement intérieur (14) et la paroi de gradin (30) du gradin de piston radialement intérieur (14) ; dans lequel :
- le fond de gradin (26) du gradin de piston radialement intérieur (14) est incliné par rapport à un premier plan imaginaire qui croise l'axe médian (M) à angle droit ;
- la région de transition (28) du gradin de piston radialement intérieur (14) est réalisée avec un rayon prédéfini (R4) ;
- la paroi de gradin (30) du gradin de piston radialement intérieur (14) est inclinée par rapport à l'axe médian (M) ;
- le fond de gradin (26) du gradin de piston radialement intérieur (14) et la paroi de gradin (30) du gradin de piston radialement intérieur (14) sont réalisés de manière plane ;
- le fond de gradin (26) du gradin de piston radialement intérieur (14) et la paroi de gradin (30) du gradin de piston radialement intérieur (14) sont réalisés de manière ascendante dans une direction radiale à l'écart de l'axe médian (M) ;
le gradin de piston radialement extérieur (16) comprend un fond de gradin (32), une paroi de gradin (36) et une région de transition (34) entre le fond de gradin (32) du gradin de piston radialement extérieur (16) et la paroi de gradin (36) du gradin de piston radialement extérieur (16) ; dans lequel :
- le fond de gradin (32) du gradin de piston radialement extérieur (16) est incliné par rapport à un deuxième plan imaginaire qui croise l'axe médian (M) à angle droit ;
- la région de transition (34) du gradin de piston radialement extérieur (16) est réalisée avec un rayon prédéfini (R6) ;
- la paroi de gradin (36) du gradin de piston radialement extérieur (16) s'étend parallèlement à l'axe médian (M) ;
- le fond de gradin (32) du gradin de piston radialement extérieur (16) et la paroi de gradin (36) du gradin de piston radialement extérieur (16) sont réalisés de manière plane ; et
- le fond de gradin (32) du gradin de piston radialement extérieur (16) est réalisé de manière ascendante dans une direction radiale à l'écart de l'axe médian (M).

2. Piston (10) selon la revendication 1, dans lequel :
le gradin de piston radialement intérieur (14) se prolonge dans la cavité de piston (12) par le biais d'un contour de division de jets (24), qui est prévu en forme d'anneau de manière périphérique autour de l'axe médian (M) .

3. Piston (10) selon la revendication 2, dans lequel :
le contour de division de jets (24) est réalisé sous la forme d'une saillie faisant saillie radialement par rapport à l'axe médian (M).

4. Piston (10) selon l'une des revendications 1 à 3, dans lequel :
le gradin de piston radialement extérieur (16) se prolonge dans la surface de tête de piston (18) en particulier de manière arrondie.

5. Piston (10) selon l'une des revendications précédentes, dans lequel :
la paroi de gradin (30) du gradin de piston radialement intérieur (14) est inclinée par rapport à l'axe médian (M) suivant un angle (γ) compris entre 0° et 60°, en particulier entre 0° et 45°, de préférence entre 15° et 45°.

6. Piston (10) selon l'une des revendications précédentes, dans lequel :
le fond de gradin (26) du gradin de piston radialement intérieur (14) est incliné par rapport au premier plan imaginaire suivant un angle (β) compris entre 0° et 60°, en particulier entre 0° et 45°, de préférence entre 15° et 45°.

7. Piston (10) selon l'une des revendications précédentes, dans lequel :
le fond de gradin (32) du gradin de piston radialement extérieur (16) est incliné par rapport au deuxième plan imaginaire suivant un angle (δ) compris entre 0° et 60°, en particulier entre 0° et 45°, de préférence entre 15° et 45°.

8. Piston (10) selon l'une des revendications précédentes, dans lequel :
la cavité de piston (12) comprend un rehaussement central (20), en particulier sous la forme d'un sommet de cône ou d'un tronc de cône, dans lequel :
le rehaussement central (20) et l'axe médian (M) forment un angle (α) dans une plage comprise entre 15° et moins de 90°, en particulier entre 40° et 80°, de préférence entre 60° et 75°.

9. Piston (10) selon l'une des revendications précédentes, dans lequel :
la surface de tête de piston (18) définit, en un point radialement le plus à l'intérieur de la surface de tête de piston (18), un diamètre intérieur (D3) qui est compris entre 30% et 75 %, en particulier entre 35 % et 70 %, de préférence entre 40 % et 60 %, d'un diamètre extérieur (D0) du piston (10).

10. Piston (10) selon l'une des revendications précédentes, dans lequel :
la pluralité de gradins de piston (14, 16) sont, dans une direction axiale le long de l'axe médian (M), renfoncés par rapport à la surface de tête de piston (18) et/ou élevés par rapport à la cavité de piston (12).

11. Piston (10) selon l'une des revendications précédentes, dans lequel :
la cavité de piston (12) présente une profondeur maximale (H0) par rapport à la surface de tête de piston (18) ; et
la profondeur maximale (HO) se situe dans une plage comprise entre 10 % et 50 %, en particulier entre 10 % et 30 %, de préférence entre 10 % et 20 %, d'un diamètre extérieur (D0) du piston (10).

12. Moteur à combustion interne, en particulier moteur diesel à combustion interne à gaz à injection directe sous haute pression (HPDI), comportant au moins un piston (10) selon l'une des revendications 1 à 11.

13. Moteur à combustion interne selon la revendication 12, comprenant en outre :
un ou plusieurs canaux d'admission d'air d'un cylindre, lesquels sont formés de telle sorte que de l'air d'admission est introduit dans le cylindre avec un tourbillon autour de l'axe médian de l'au moins un piston, pour un processus de combustion tourbillonnant.

14. Moteur à combustion interne selon la revendication 12, lorsqu'elle dépend au moins de la revendication 2, ou la revendication 13, lorsqu'elle dépend au moins de la revendication 2 par le biais de la revendication 12, comprenant en outre :
un injecteur qui est disposé centralement dans le cylindre et est réalisé pour introduire du carburant diesel et du carburant gazeux de manière orientée vers le contour de division de jets (24) du piston (10).

15. Véhicule automobile, en particulier véhicule utilitaire doté d'au moins un piston (10) selon l'une des revendications 1 à 11 ou d'un moteur à combustion interne selon l'une des revendications 12 à 14.
